# DEMANDE DE BREVET EUROPEEN

(11) **EP 0 900 527 A2**
(43) Date de publication de la demande: **10.03.1999**
(21) Numéro de dépôt: 98114622.8
(22) Date de dépôt: 04.08.1998
(51) Int. Cl.: A21D 13/00

(54) **Petit pain garni**

(30) Priorité: 05.09.1997 IT VI970151
(71) Demandeur: FAS International S.p.A., 36010 Zané (Vicenza) (IT)
(72) Inventeur: Adriani, Antonio, 36015 Schio (Vicenza) (IT)
(74) Mandataire: Bettello, Pietro, Dott. Ing.

(57) **Abrégé**

Il s'agit d'un petit pain garni réalisé en une pâte à pain, ou d'autres types de matières farineuses, destinée à être combinée à des produits de garniture (4) tels que du fromage, du jambon ou analogues. Le petit pain garni (1) se caractérise en ce qu'il comprend une base en pâte à pain (2) dans laquelle sont formées des niches (3) de réception des produits de garniture (4).

## Description

La présente invention a pour but de réaliser un petit pain garni conforme au préambule de la revendication 1.

Un tel petit pain est habituellement constitué par une base en pâte à pain contenant des produits alimentaires divers tels que du saucisson, du jambon, du fromage et d'autres.

Le 〈〈 petit pain 〉〉 commun, garni de saucisson, de fromage, de jambon et de produits analogues, se confectionne en coupant le morceau de pain horizontalement en deux moitiés; une fois ouvert, on y insère les produits de garniture en petits morceaux ou en tranches; ensuite, on referme les deux morceaux de pain en réalisant de cette façon le petit pain garni.

Dans l'état actuel de la technique, la production de petits pains garnis à l'échelle industrielle s'effectue encore essentiellement dans le mode manuel parce que, de par la nature même des constituants, on ne peut rendre automatiques que l'opération de coupe horizontale, l'ouverture et la fermeture ultérieure du morceau de pain, tandis que l'opération d'insertion des produits de garniture, en petits morceaux ou en tranches, s'effectue encore manuellement ou, tout au plus, avec des machines semi-automatiques.

Cette production entraîne évidemment de notables inconvénients, aussi bien de nature économique, parce qu'elle ne permet pas d'obtenir une grande productivité, que de nature hygiénique, parce que les produits de garniture, fromages et charcuterie en général, doivent nécessairement être manipulés par l'opérateur.

Une autre difficulté se présente lorsque le produit garni doit être fourni chaud au consommateur, de sorte qu'il doit alors être placé dans un four, en général de type électrique, pendant quelques minutes.

Il est évident que le chauffage de l'ensemble du petit pain garni ne peut pas se produire de façon uniforme puisque les produits de garniture placés à l'intérieur sont moins chauffés que le support en pâte à pain, de sorte que, si ces produits demandent à atteindre une certaine température, par exemple pour le fromage fondant, il y a un risque de cuisson irrégulière de la pâte à pain.

D'autres inconvénients, qui ne sont pas moins dommageables que les précédents, se manifestent dans les phases de confection et de distribution finale du petit pain garni.

En effet, pour des raisons hygiéniques, le petit pain garni produit industriellement doit être conditionné dans un conteneur aseptique, qui n'est ouvert que par le consommateur final.

L'opération de conditionnement, qu'elle soit exécutée par les habituelles machines de conditionnement horizontales à film à simple épaisseur ou avec le système 〈〈 slim torque 〉〉, dans lequel la pellicule enveloppe complètement le produit, est de toute façon rendue difficile par la conformation du petit pain garni, qui se présente toujours sous une forme irrégulière et dans lequel les produits de garniture débordent quelquefois en dehors du morceau de pain, tout ceci constituant un obstacle à la productivité de l'opération.

En outre, la distribution du petit pain garni produit industriellement s'effectue normalement au moyen de distributeurs automatiques installés dans les écoles, les usines, les hôpitaux, les gares, les aéroports et autres lieux analogues, où il est nécessaire de distribuer au public des produits de restauration, éventuellement accompagnés de gobelets de café ou d'autres boissons chaudes ou froides.

La caractéristique principale de ces produits de restauration, outre le fait qu'ils peuvent être consommés facilement et rapidement, est surtout celle de pouvoir être consommés 〈〈 frais 〉〉.

Ceci implique, en particulier dans la distribution du petit pain garni normal, que la personne préposée à la distribution doit journellement renouveler les réserves dans le distributeur puisqu'en raison des caractéristiques organoleptiques spécifiques de ses constituants et, en particulier en ce qui concerne la garniture (le fromage, le jambon et la charcuterie en général) divisée en morceaux ou en tranches, le petit pain ne peut plus être surgelé ni maintenu à basse température pendant plusieurs jours, ce qui crée par conséquent aussi des problèmes dans le stockage des réserves.

L'invention vise à remédier à tous ces inconvénients par la réalisation d'un petit pain garni qui, tout en étant formé par les mêmes constituants, y compris sous le rapport de la quantité, que le petit pain garni habituel, permet notamment une production industrielle entièrement automatique, un conditionnement parfaitement hygiénique et une distribution rapide.

Ceci est atteint conformément aux caractéristiques de la partie caractérisante de la revendication 1. D'autres formes de réalisations avantageuses font l'objet des sous-revendications.

On prévoit que le petit pain garni selon l'invention est constitué par une base en pâte à pain contenant intérieurement le produit de garniture, dans des niches appropriées.

Plus précisément, la base en pâte à pain est constituée par un bloc de pâte, de forme parallélépipédique ou circulaire et d'épaisseur limitée, et muni sur sa grande face de trous qui traversent de préférence toute l'épaisseur de la base.

Le produit de garniture, tel que du fromage, jambon, charcuterie ou autres en petits morceaux ou sous forme de pâte, est déposé dans ces trous, de préférence jusqu'à ce qu'ils soient entièrement remplis.

On obtient de cette façon un produit garni à base de pâte à pain qui présente la même quantité de constituants et a le même goût qu'un petit pain garni habituel réalisé manuellement, et qui a aussi la même consistance et la même commodité de manipulation qu'un produit cuit au four comme les en-cas, les brioches et produits analogues de structure compacte.

Dans un mode avantageux, on pratique sur une ou sur chacune des surfaces de la base en pâte à pain, des entailles qui permettent de la briser en petits blocs bien carrés, chaque bloc contenant au moins une portion de produit de garniture, dans le cas où le consommateur désire manger le petit pain garni en petits morceaux.

En outre, le petit pain garni ainsi réalisé garantit l'exactitude du poids des différents constituants et, grâce à sa forme bien précise et régulière, l'opération de conditionnement, sous vide ou sous atmosphère contrôlée, peut s'effectuer rapidement, en utilisant une pellicule d'enveloppement apte à supporter la chaleur, par exemple, celle d'un four à rayons infrarouges, dans le cas où le client désire consommer un produit chaud.

L'opération de chauffage du petit pain garni, qui s'effectue directement dans le distributeur automatique, est elle aussi améliorée parce que les produits de garniture, en entrant en contact direct avec la source de chaleur, grâce aux trous ouverts, s'échauffent de façon régulière et plus rapidement.

Les produits de garniture qu'il s'agit de placer dans la pluralité de trous présents sur la base de pain peuvent être de différents types, ce qui permet de produire un même petit pain garni qui présente plusieurs goûts distincts, ce qui, sous l'aspect commercial, constitue un avantage appréciable.

Finalement, toujours en raison de sa conformation particulière et de son conditionnement particulier, le petit pain garni selon l'invention se présente donc comme un produit industriel de longue conservation, qui peut être facilement stocké et se prête à être personnalisé par des marquages sur le conditionnement, ce qui en améliore l'aspect commercial.

Le procédé de fabrication du petit pain garni selon l'invention n'exige pas de machine particulière puisqu'il comprend seulement des phases simples à mettre en oeuvre, plus précisément :
- réalisation des formes, de préférence du type quadrilatère, qui constituent la base de la pâte à pain ou d'un autre type de produit farineux ;
- cuisson au four des bases en pâte à pain, après réalisation préalable des trous destinés à recevoir les produits de garniture et des lignes d'amorce de rupture ;
- remplissage total ou partiel des trous avec des produits de garniture (formage, jambon, charcuterie en général ou autres) au moyen de machines doseuses d'un type connu en soi;
- conditionnement des petits pains garnis isolés, sous vide ou sous atmosphère contrôlée, à l'aide de machines conditionneuses d'un type connu en soi.

La distribution de ces petits pains garnis s'effectue elle aussi à l'aide de distributeurs automatiques connus en soi, éventuellement équipés d'un appareillage de chauffage du produit, puisque le produit n'exige pas de système particulier de conservation ni d'entreposage.

Ces caractéristiques, ainsi que d'autres avantages de l'invention par rapport à l'art antérieur, ressortiront plus clairement de la description d'une forme possible de réalisation du petit pain garni selon l'invention, donnée uniquement à titre d'exemple illustratif et non limitative, à l'aide des dessins annexés sur lesquels :
la Fig. 1 représente une vue en perspective du petit pain garni selon l'invention;
la Fig. 2 représente une vue en coupe du petit pain selon l'invention;
la Fig. 3 représente une vue en perspective d'un bloc individuel du petit pain selon l'invention.

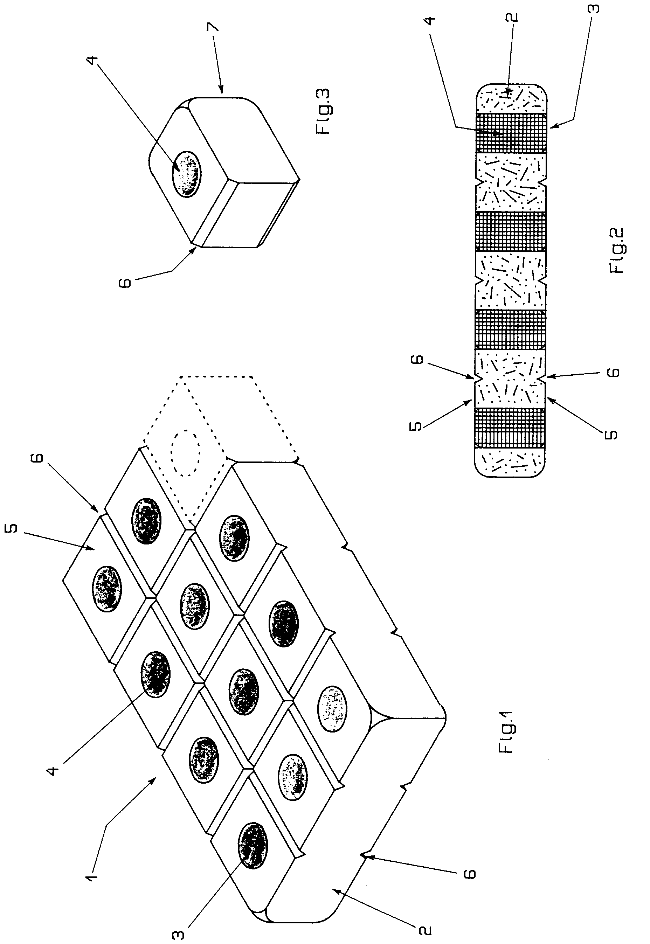

Comme on peut le voir sur la Fig. 1 le petit pain 1 selon l'invention se compose d'une base 2 en pâte à pain cuite, dans laquelle sont formés des logements cylindriques traversants 3 remplis de produits de garniture 4.

Sur les deux faces principales 5 de la base 2, sont pratiquées des incisions linéaires 6 propres à faciliter la division en petits blocs 7, qui sont chacun pourvus d'un logement pour le produit de garniture. On entend par faces principales 5 de la base 2 les faces de cette dernière, par lesquelles sont introduits les produits de garniture et qui, de manière habituelle, présentent les dimensions les plus importantes.

Naturellement, les dimensions de la base en pâte à pain, le dimension et le nombre des trous destinés à contenir le produit de garniture, ainsi que la diversité des produits de garniture présents sur un même petit pain, peuvent varier sans pour cela sortir du domaine du brevet.

Uniquement à titre d'exemple, on indique les caractéristiques d'un produit possible où, sur une base en pâte à pain de dimensions 8x6x3 cm, sont formés douze trous traversants destinés à contenir deux ou plus de deux types de produits de garniture tels que jambon, fromage, charcuterie, disposés d'une façon ordonnée ou sans ordre.

## Revendications

1. PETIT PAIN GARNI réalisé en une pâte à pain, ou d'autres types de matières farineuses, destinée à être combinée à des produits de garniture (4) tels que fromage, jambon, charcuteries diverses et analogues, ledit petit pain garni (1) étant caractérisé en ce qu'il comprend une base en pâte à pain (2), dans laquelle sont ménagées des niches (3) de réception des produits de garniture (4).

2. PETIT PAIN GARNI selon la revendication 1, caractérisé en ce que, sur au moins l'une des deux faces principales (5) de la base en pâte à pain (2), sont formées des incisions (6), de préférence linéaires, permettant de découper ladite base en petits blocs, notamment réguliers (7).

3. PETIT PAIN GARNI selon une ou plusieurs des revendications précédentes, caractérisé en ce que les niches (3) sont constituées par des trous qui traversent toute l'épaisseur de la base (2).

4. PETIT PAIN GARNI selon une ou plusieurs des revendications précédentes, caractérisé en ce que les dimensions des niches ou des trous traversants (3) sont variables sur une même base (2).

5. PETIT PAIN GARNI selon une ou plusieurs des revendications précédentes, caractérisé en ce que les produits de garniture (4) sont différents sur une même base de pain (2), et éventuellement disposés d'une façon irrégulière.

6. PETIT PAIN GARNI selon une ou plusieurs des revendications précédentes, caractérisé en ce que la forme de la base (2) en pâte à pain est parallélépipédique.

7. PETIT PAIN GARNI selon une ou plusieurs des revendications 1 à 5, caractérisé en ce que la base (2) en pâte à pain est de forme pratiquement circulaire.

8. PETIT PAIN GARNI selon une ou plusieurs des revendications précédentes, caractérisé en ce qu'il est conditionné sous vide et/ou sous atmosphère contrôlée.

9. PETIT PAIN GARNI selon une ou plusieurs des revendications précédentes, caractérisé en ce que les produits de garniture (4) sont propres à être chauffés en contact direct avec une source de chaleur.

10. PETIT PAIN GARNI selon une ou plusieurs des revendications précédentes, caractérisé en ce qu'il est conditionné de manière à pouvoir être chauffé, avant la consommation, sans qu'il soit nécessaire de le débarrasser de l'enveloppe.

11. PETIT PAIN GARNI selon une ou plusieurs des revendications précédentes, caractérisé en ce qu'il peut être produit de façon entièrement automatique.

12. PROCEDE DE REALISATION DU PETIT PAIN GARNI selon une ou plusieurs des revendications précédentes, caractérisé en ce qu'il comprend les étapes consistant à :
- réaliser une base en pâte à pain ou autres types de matières farineuses ;
- cuire au four lesdites bases, après réalisation préalable de trous destinés à recevoir des produits de garniture et, éventuellement, de lignes d'amorce de rupture;
- remplir totalement ou partiellement les trous avec les produits de garniture, à l'aide de machines doseuses d'un type connu en soi;
- conditionner les petits pains individuels, éventuellement sous vide ou sous atmosphère contrôlée, à l'aide de machines conditionneuses connues en soi.
